# EUROPÄISCHE PATENTANMELDUNG

(11) **EP 1 275 814 A1**
(43) Veröffentlichungstag der Anmeldung: **15.01.2003**
(21) Anmeldenummer: 02015702.0
(22) Anmeldetag: 12.07.2002
(51) Int. Cl.: E21B 7/20, E21D 9/00, E21B 17/02

(54) **Fixierung der Versorgungsleitungsabschnitte beim unterirdischen Vortrieb**

(30) Priorität: 13.07.2001 DE 10133614
(71) Anmelder: Bilfinger Berger AG, 68165 Mannheim (DE)
(72) Erfinder: Feller, Oliver, Dipl.-Ing., 22391 Hamburg (DE)
(74) Vertreter: Skora, Michael

(57) **Zusammenfassung**

Die Erfindung betrifft ein Rohrelement (24) und eine Presse zur Verwendung bei einem unterirdischen Vortrieb, um einen unterirdischen Vortrieb zu verbessern, sind gemäß der Erfindung Elemente vorgesehen, wie eine Fixierungsvorrichtung zur Fixierung der Versorgungsleitungsabschnitte, welche eines Ringelement mit Aufnahmen aufweist, mit denen der vor Ort im Arbeitsschacht (10) zu erbringende Arbeitsumfang reduziert wird, um insbesondere die Stillstandzeiten des Tunnelvortriebssystems zu verkürzen.

## Beschreibung

Die Erfindung betrifft ein Druckringadaptersystem für einen unterirdischen Rohrvortrieb, mit einem Rohrelement zur Verwendung in einem unterirdischen Vortrieb, einer Presse zur Verwendung bei einem unterirdischen Vortrieb, in dem Rohrelement bzw. der Presse vorgesehene Elemente zur Verwendung bei einem unterirdischen Vortrieb, sowie ein Verfahren zum unterirdischen Rohrvortrieb.

Aus der Praxis ist bekannt, Rohrleitungen, insbesondere Abwasserrohrleitungen in einem unterirdischen Vortrieb zu verlegen. Dazu wird ein Tunnelvortriebsystem mit einer Bohr-, Schramm- oder Grabvorrichtung verwendet, welches sich ausgehend von einem Arbeitsschacht durch den Untergrund vorarbeitet. Dem Tunnelvortriebssystem folgend werden Rohrelemente ausgehend von dem Arbeitsschacht durch Pressen im Untergrund verlegt, wobei die Rohrelemente nach Abschluß des Vortriebes im Untergrund verbleiben.

Eine Bohrvorrichtung für den Vortrieb nicht begehbarer Produktenrohre im Erdreich ist insbesondere aus DE 92 09 545 U1 bekannt.

Um das Tunnelvortriebssystem mit Energie zu versorgen, um den Abraum über Tage zu fördern und um die Rohrelemente zu schmieren oder zu verpressen sind Versorgungsleitungen vorgesehen, welche durch den Arbeitsschacht und ggf. bereits verlegte Rohrelemente zu dem Tunnelvortriebssystem führen. Da die Grundfläche und die lichte Öffnungsweite des Arbeitsschachtes begrenzt sind, können bei dieser Art des Rohrvortriebes nur verhältnismäßig kurze Rohrelemente verwendet werden. Hat sich das Tunnelvortriebssystem eine Rohrelementlänge weit vorgearbeitet und ist ein entsprechendes Rohrelement in den so gebildeten Tunnel nachgeschoben worden, ist es gemäß dem Stand der Technik erforderlich, die Versorgungsleitungen zu kappen, um ein neues Rohrelement einsetzen zu können. Dies macht es erforderlich, das Tunnelvortriebssystem still zu setzen. Auf diese Weise reduziert sich die effektive Arbeitszeit des Tunnelvortriebssystems ganz erheblich, da das Kappen und Neuanschließen der Versorgungsleitungen etwa eine Arbeitsstunde erfordert. Zudem ist das Kappen und Neuanschließen der Versorgungsleitungen eine körperlich anstrengende und schmutzige Arbeit, da bisher nicht verhindert werden kann, daß die Versorgungsleitungen, die flüssige Medien führen, leer laufen. Zwar ist gemäß DE 92 09 545 U1 vorgesehen, Rohrelemente mit Versorgungsleitungsabschnitten oberirdisch vorzukonfektionieren, dennoch ist die Handhabung der dabei vorgesehenen Schnellkupplungen mühselig und zeitraubend.

Der Erfindung liegt die Aufgabe zu Grunde, den unterirdischen Rohrvortrieb zu verbessern.

Die Lösung diese Aufgabe erfolgt erfindungsgemäß mit den Merkmalen der Ansprüche 1, 11, 13, 16 bzw. 17.

Gemäß der Erfindung ist vorgesehen, den unterirdischen Rohrvortrieb dadurch zu verbessern, daß der vor Ort im Arbeitsschacht zu erbringende Arbeitsumfang reduziert wird, um insbesondere die Stillstandzeiten des Tunnelvortriebssystems zu verkürzen. Der den unabhängigen Ansprüchen gemeinsam zugrundeliegende Gedanke ist es, ein Stecken der Versorgungsleitungsabschnitte zu ermöglichen. Dazu ist gemäß Anspruch 1 vorgesehen, bei Rohrelementen, die mit einen oberirdisch eingebrachten Leitungsträger und von dem Leitungsträger gehaltenen Versorgungsleitungsabschnitten vorkonfektioniert sind, den Leitungsträger mit mindestens einer Fixierungsvorrichtung zu versehen, mit welcher eine lagegenaue Fixierung der Versorgungsleitungsabschnitte gegenüber den Rohrelementen erfolgt. Die Fixierungsvorrichtung sollte dabei vorzugsweise so gestaltet sein, daß die innere Oberfläche des Rohrelementes nicht beschädigt wird, was sich insbesondere durch Klemmvorrichtungen erreichen läßt.

Vorzugsweise weist der Leitungsträger eines solchen Rohrelementes mindestens ein an dem Innenquerschnitt des Rohrelementes angepaßtes Ringelement auf. Solche Ringelemente sind sowohl oberirdisch leicht zu montieren als auch unterirdisch leicht zu demontieren. Ein solches Ringelement ermöglichst dabei auch ein bequemes Begehen der Rohrelemente.

An den Ringelementen sind gemäß einer bevorzugten Ausführungsform mindestens zwei, vorzugsweise sechs Aufnahmen zur Halterung der Versorgungsleitungsabschnitte vorgesehen, wobei die Aufnahmen derart ausgebildet sind, daß die Versorgungsleitungsabschnitte quer zu ihrer Erstreckung in jeder Richtung mindestens 20, vorzugsweise 40 mm gegenüber den Aufnahmen verlagerbar sind. Eine solche Ausgestaltung gewährleistet, daß bei einem Vortrieb in ungünstigem Untergrund, bei dem das Tunnelvortriebssystem nicht 100%ig exakt gerade läuft, dadurch bedingte Achsabweichungen nicht zu einer Unterbrechung der durch die Versorgungsleitungsabschnitte gebildeten tunnelseitigen Versorgungsleitungen führen.

Besonders zweckmäßig ist es, wenn die Aufnahmen jeweils mindestens zwei aus einem elastischen Material, insbesondere Gummi gefertigte Halteelemente aufweisen, die insbesondere ringförmig ausgebildet sind. Solche Halteelemente haben sich in der Praxis als besonders geeignet erwiesen, da sie konstruktionsbedingt den Bedürfnissen vor Ort besonders entsprechen. Vor Ort herrschen nämlich rauhe Umweltbedingungen, unter denen filigrangestaltete und empfindliche Bauteile versagen müssen. Zudem sind solche Haltelemente äußerst preisgünstig, so daß eine Beschädigung derselben oder ein Verlust keinen nennenswerten wirtschaftlichen Schaden darstellt.

Mindestens zwei Versorgungsleitungsabschnitte sollten rohrartig ausgebildet sein und kuppelbare Enden aufweisen, welche in einem Bereich von mindestens 20 mm, vorzugsweise mindestens 50 mm in Richtung der Längserstreckung der Versorgungsleitungsabschnitte einen flüssigkeitsdichten Übergang zwischen zwei benachbarten Rohrelementen gewährleisten. Mit solchermaßen gestalteten Versorgungsleitungsabschnitten ist es besonders einfach möglich, das Tunnelvortriebssystem mit einer Spülflüssigkeit zu versorgen und den von dem Tunnelvortriebssystem gelockerten Abraum über Tage zu fördern. Einfädelvorrichtungen, insbesondere Einführtrichter an den Enden der Versorgungsleitungsabschnitte erleichtern das Herstellen der Versorgungsleitungen, wobei die Gestaltungen gemäß den Ansprüchen 7 und 8 sich als besonders zweckmäßig erwiesen haben.

Mit Abraum angereicherte Spülflüssigkeit wirkt in Versorgungsleitungen wie ein Schleifmittel und führt daher an diesen zu einem hohen Verschleiß. Es hat sich daher als zweckmäßig erwiesen, Versorgungsleitungsabschnitte mehrteilig auszubilden, wobei an Rohrmittelstücken lösbare Endstücke vorgesehen sind. Die Endstücke, welche zur Kupplung der Versorgungsleitungsabschnitte dienen, können dadurch ohne weiteres sehr massiv ausgeführt werden, ohne daß der Versorgungsleitungsabschnitt insgesamt ein nicht mehr handhabbares Gewicht erhält. Sollten die Rohrmittelstücke einen nennenswerten Verschleiß aufweisen, können diese kostengünstig ersetzt werden.

Die Versorgungsleitungsabschnitte sind gemäß einer bevorzugten Ausführungsform, vorzugsweise an einem ihrer Enden mit Absperrelementen versehen, um das Austreten von Medien, die über die Versorgungsleitungen transportiert werden, auf ein Minimum einzuschränken. Dadurch wird nicht nur Material eingespart und eine verschmutzungsfreie Baustelle geschaffen, es wird darüber hinaus auch die Stillstandszeit des Tunnelvortriebssystems verringert, da die Versorgungsleitungen nicht nach jedem Kappen erneut überwiegend oder vollständig zu befüllen sind.

Gemäß Anspruch 10 wird die der Erfindung zugrunde liegende Aufgabe unter Beachtung des Grundgedankens eines Steckens der Versorgungsleitungsabschnitte dadurch gelöst, daß eine Presse mit mindestens einem Druckring oder Druckstücken zum Angriff an einem Rohrelement zur Verfügung gestellt wird, die durch einen Druckringadapter gekennzeichnet ist, welcher Versorgungsleitungen für den unterirdischen Vortrieb trägt. Auf diese Weise wird das Verbinden des Tunnelvortriebssystems mit seinen oberirdisch angeordneten Versorgungsagregaten erleichtert, was zu einer erheblichen Zeitersparnis und damit kürzeren Stillstandzeiten des Tunnelvortriebssystems führt.

Vorzugsweise weisen die Versorgungsleitungen an ihrem druckringadapterseitigen Ende Absperrelemente auf, wodurch an dieser Stelle ein Leerlaufen der Versorgungsleitungen verhindert wird.

Die der Erfindung zugrundeliegende Aufgabe wird auch gelöst, wenn ein Druckringadapter gemäß Anspruch 15 zum Anbau an eine Presse zur Verfügung gestellt wird. Gleiches gilt für eine Fixierungsvorrichtung, insbesondere ein Ringelement zum Einbau in ein bei einem unterirdischen Vortrieb zu verwendendes Rohrelement. Vorzugsweise sind alle Enden von Versorgungsabschnitten, auch die an den Enden etwaig flexibler Schläuche an dem Druckringadapter, durch Stecken abdichtend kuppelbar, ohne daß eine Kupplung oder Schelle zu betätigen ist.

Eine Lösung der Aufgabe der Erfindung erfolgt auch mit dem erfindungsgemäßen Verfahren zum unterirdischen Rohrvortrieb, bei dem Rohrelemente mittels einer Presse in einen Tunnel einem Tunnelvortriebsystem folgend gepresst werden, wenn dieses Verfahren dadurch gekennzeichnet ist, daß bei zurückgefahrener Presse mit dem Ansetzen eines neuen Rohrelementes an ein vorhergehendes Rohrelement gleichzeitig ohne zusätzliche Manipulation Versorgungsleitungen des Tunnelvortriebssystems durch Stecken abdichtend verlängert werden.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1: einen Arbeitsschacht mit einer darin angeordneten erfindungsgemäßen Presse gemäß einer bevorzugten Ausführungsform sowie vor der Presse angeordneten erfindungsgemäßen Rohrelementen gemäß einer bevorzugten Ausführungsform,
- Fig. 2: einen Schnitt durch ein erfindungsgemäßes Rohrelement gemäß einer bevorzugten Ausführungsform gemäß der Linie II-II in Fig. 1,
- Fig. 3: einen Ausschnitt des Rohrelementes in Fig. 2 mit mehreren in einer Aufnahme gehaltenen Versorgungsleitungsabschnitten,
- Fig. 3a: einen vergrößerten Ausschnitt aus Fig. 3,
- Fig. 4: die Enden zweier Versorgungsleitungsabschnitte in einer Übersichtsdarstellung in einem gesteckten Zustand,
- Fig. 5: die Enden zweier Versorgungsleitungsabschnitte im Detail in einem ungesteckten Zustand,
- Fig. 6: den Übergangsbereich zwischen einem Endstück eines Versorgungsleitungsabschnitts und einem Rohrmittelstück,
- Fig. 7: einen Schnitt durch ein erfindungsgemäßes Rohrelement gemäß einer bevorzugten Ausführungsform gemäß der Linie VII-VII in Fig. 1,
- Fig. 8: einen vergrößerten Ausschnitt aus Fig. 7,
- Fig. 9: eine Ansicht auf einen Druckring mit einem erfindungsgemäßen Druckringadapter gemäß einer bevorzugten Ausführungsform gemäß dem Pfeil IX in Fig. 8, und
- Fig. 10: einen Schnitt durch ein erfindungsgemäßes Rohrelement gemäß einer bevorzugten zweiten Ausführungsform entsprechend der Linie II-II in Fig. 1, mit einer als Teleskopstange oder Spindel ausgebildeten Fixierungsvorrichtung.

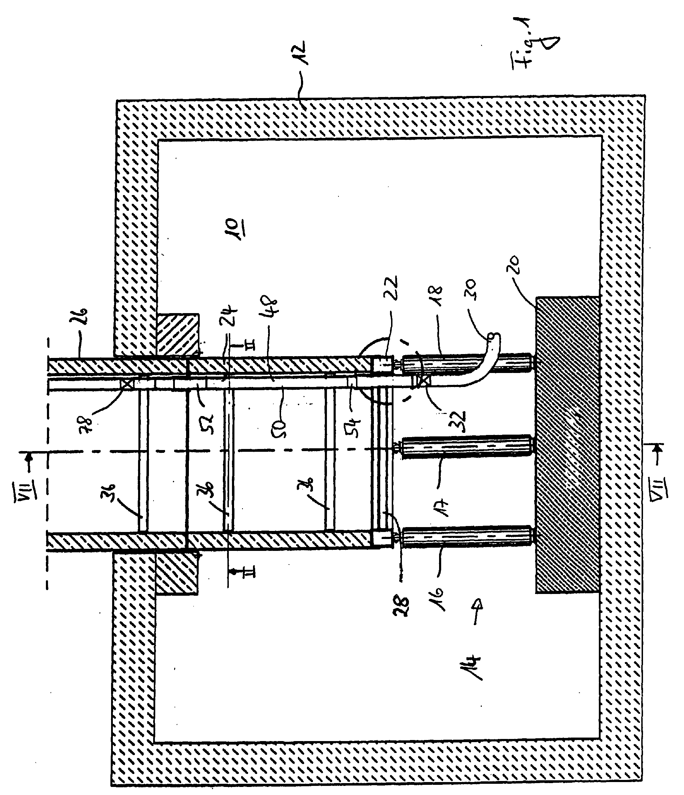

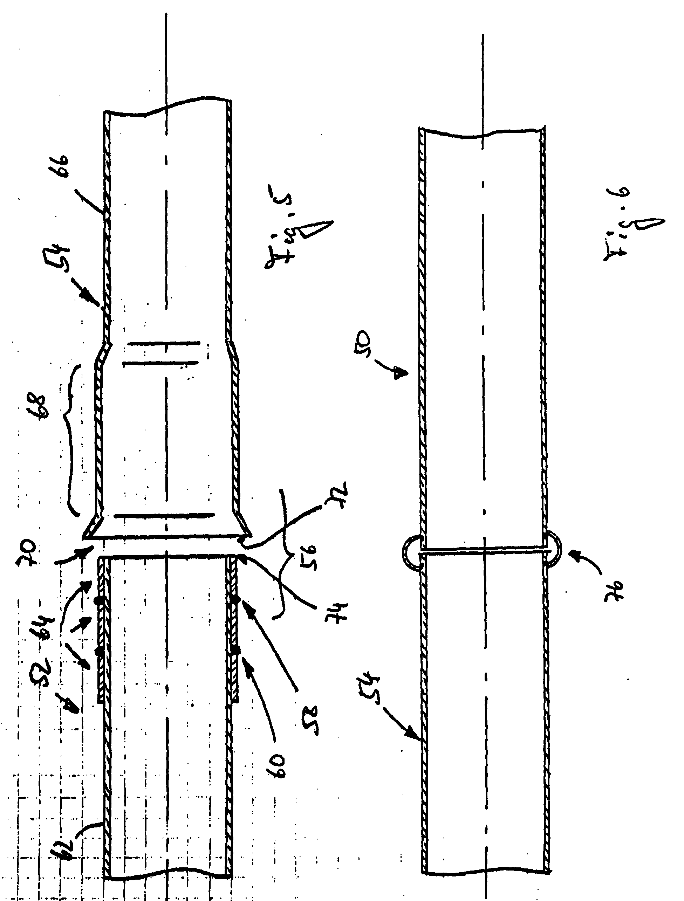

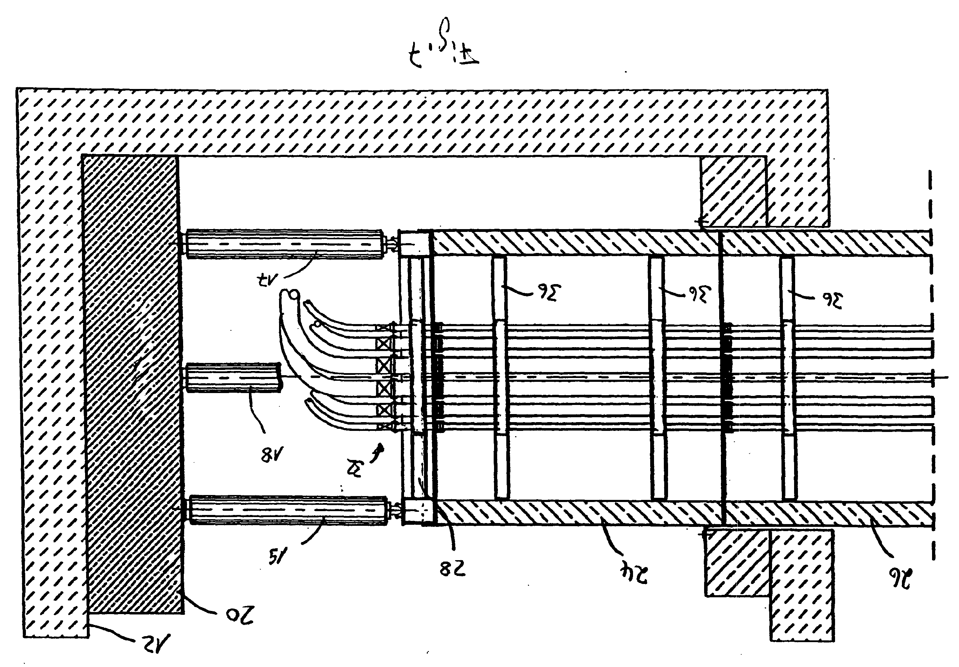

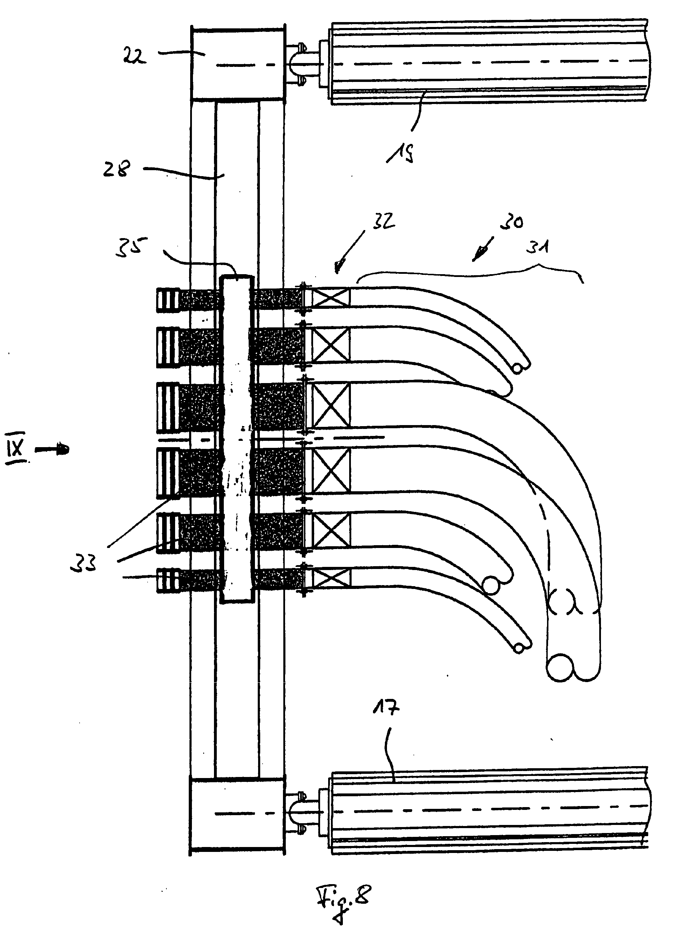

Der in Fig. 1 in einem horizontalen und in Fig. 7 in einem vertikalen Schnitt gezeigte Arbeitsschacht 10 hat eine Grundfläche von etwa 5 x 6 Metern und ist durch eine Schachtwandung 12 gegen das Nachrutschen von losem Erdreich gesichert. In dem Arbeitsschacht 10 ist eine Presse 14 angeordnet, welche vier Pressenzylinder 16, 17, 18, 19 aufweist, die an einem Gestell 20 oder Widerlager aus Stahlbeton gelagert sind. Das Gestell 20 dient auch als Widerlager und stützt sich an der Schachtwandung 12 ab. An dem dem Gestell 20 gegenüberliegenden Ende der Pressenzylinder 16, 17, 18, 19 ist ein Druckring 22 angeordnet, mit welchem Rohrelemente 24, 26 vorzugsweise begehbare Rohrelemente mit einem Durchmesser größer 600 mm, im gezeigten Falle mit einem Durchmesser von 2000 mm einen Tunnelvortriebssystem (nicht gezeigt) folgend verpresst werden können.

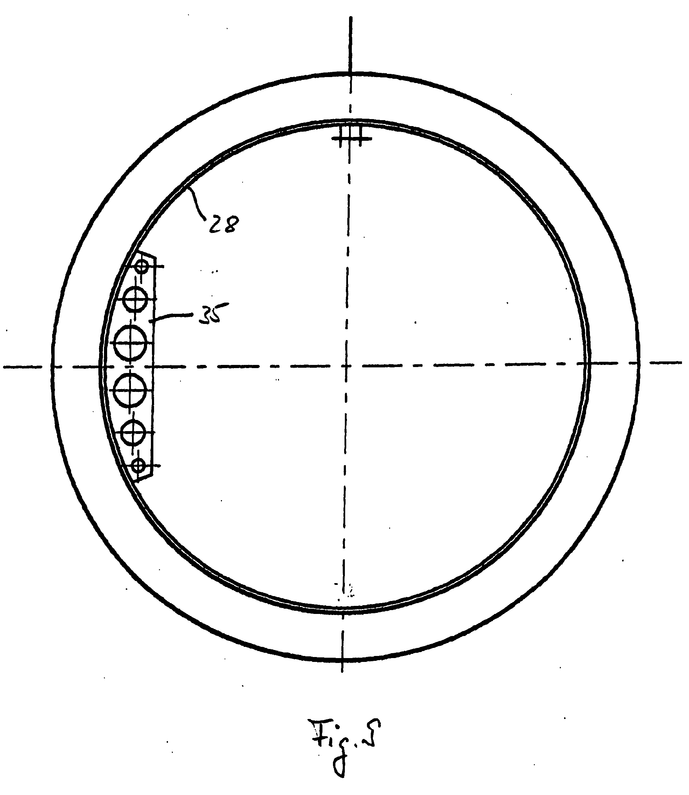

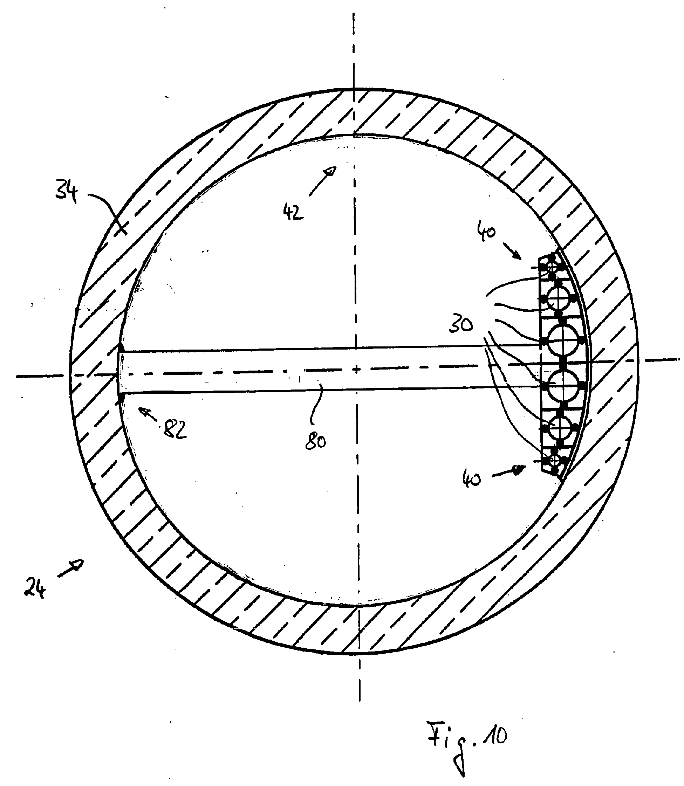

Der Druckring 22 ist mit einem Druckringadapter 28 (Fig. 8, 9) versehen, welcher dazu dient, Versorgungsleitungen 30 zu tragen. An dem Druckringadapter 28 liegen die Versorgungsleitungen 30 in einem Muster, das dem Muster entspricht, in welchem - wie nachfolgend erläutert -auch die Versorgungsleitungsabschnitte in den Rohrelementen 24, 26 liegen. Die Versorgungsleitungen 30, von denen in Fig. 1 lediglich eine Versorgungsleitung gezeigt ist, umfassen zwei Spülschläuche mit einem Durchmesser von 150 bis 200 mm für die Zufuhr gereinigter Spülflüssigkeit und die Abfuhr mit Abraum belasteter Spülflüssigkeit, zwei Druckluftleitungen für die Druckluftzufuhr, von denen eine Druckluftleitung einen Durchmesser von 150 mm aufweist und als Arbeitsluftleitung vorgesehen ist und eine Druckluftleitung einem Durchmesser von 80 mm aufweist und als Sicherheitsluftleitung vorgesehen ist, sowie eine Leitung zur Abfuhr von Grund und Abwasser mit einem Durchmesser von 100 mm sowie schließlich eine Leitung mit einem Durchmesser von 80 mm für die Zufuhr von Betonit zur Schmierung und Verpressung. Die Versorgungsleitungen 30 sind druckfest ausgeführt und mindestens bis zum Bereich des Druckringadapters 28 flexibel. Details des Druckringadapters 28 werden im Zusammenhang mit der Beschreibung der Fig. 8 und 9 erläutert.

Die Versorgungsleitungen 30 sind im Bereich des Druckringadapters 28 mit Absperrelementen 32 versehen, welche dazu dienen, einen Austritt des in den Versorgungsleitungen 30 jeweils geführten Mediums zu verhindern, wenn nach dem Einpressen eines Rohrelementes 24 der Druckring 22 zurückgefahren wird, um ein neues Rohrelement einsetzen zu können.

In Fig. 8 ist zu erkennen, daß die Versorgungsleitungen 30 im Anschluß an flexible Abschnitte 31 starre Rohrstücke 33 aufweisen, welche von einer Haltestruktur 35 an dem Druckringadapter 28 derart gehalten werden, daß auf die Rohrstücke wirkende Kräfte von dem Druckringadapter 28 aufgenommen werden können.

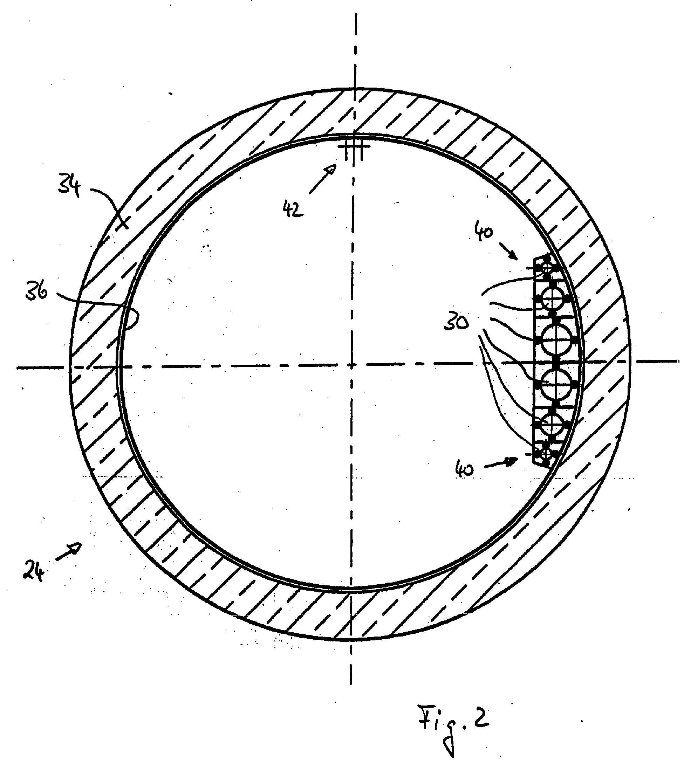

Die Rohrelemente 24, 26, von denen eines exemplarisch in Fig. 2 im Schnitt gezeigt ist, weisen einen aus Beton gefertigten Rohrelementring 34 auf, welcher nach Durchführung der Baumaßnahme im Untergrund verbleibt. Im Innern eines jeden Rohrelementringes 34 sind als Fixierungsvorrichtung jeweils zwei Ringelemente 36 angeordnet, deren Außendurchmesser an den Innendurchmesser des Rohrelementringes 34 angepaßt ist. Diese Ringelemente 36 sind in dem Rohrelementring 34 derart verspannt, daß Aufnahmen 40 für Versorgungsleitungen 30 und mittelbar darüber auch die Versorgungsleitungen 30 selbst sicher gehalten werden können. Zwei Ringelemente 36 mit den daran befestigten Aufnahmen 40 bilden zusammen jeweils einen Leitungsträger, ohne daß die Ringelemente 36 miteinander direkt verbunden sind. Die Ringelemente 36 weisen jeweils Spannschlößer 42 auf, die es erlauben, den Durchmesser der Ringelemente 36 nach Durchführung einer Baumaßnahme derart zu verringern, daß die Ringelemente 36 aus dem Rohrelementring 34 wieder entfernbar sind.

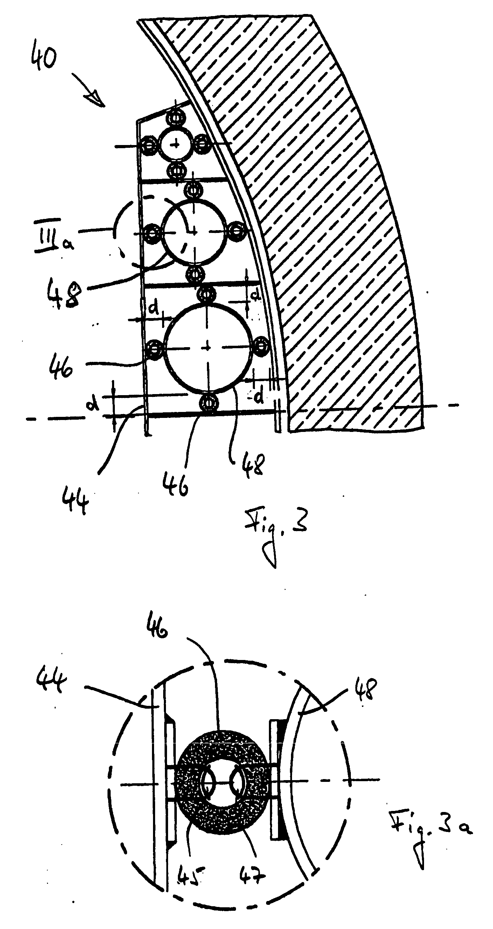

Die Aufnahmen 40, von denen drei in Fig. 3 und ein Ausschnitt daraus in Fig. 3a im Detail gezeigt sind, weisen jeweils einen Rahmen 44 auf, an welchem erste Haltelaschen 45 angeschweißt sind. Die ersten Haltelaschen 45 dienen dazu, Haltelemente 46 gegenüber dem Rahmen 44 festzulegen, wobei die Halteelemente 46 Gummiringe mit einem Durchmesser von etwa 30 mm sind, wie sie aus der Befestigung von Kfz-Abgasanlagen bekannt sind. Die Halteelemente 46 ihrerseits greifen über zweite Haltelaschen 47 an Versorgungsleitungsabschnitten 48 an, welche die Versorgungsleitungen 30 zu dem Tunnelvortriebssystem hin verlängern. Die Halteelemente 46 ermöglichen eine Verlagerung der Versorgungsleitungsabschnitte 48 um mindestens eine Distanz d von 20 mm. Dennoch erfolgt durch die Fixierungsvorrichtung und die Aufnahmen 40 eine lagegenaue Fixierung der Versorgungsleitungsabschnitte 48 gegenüber dem Rohrelement.

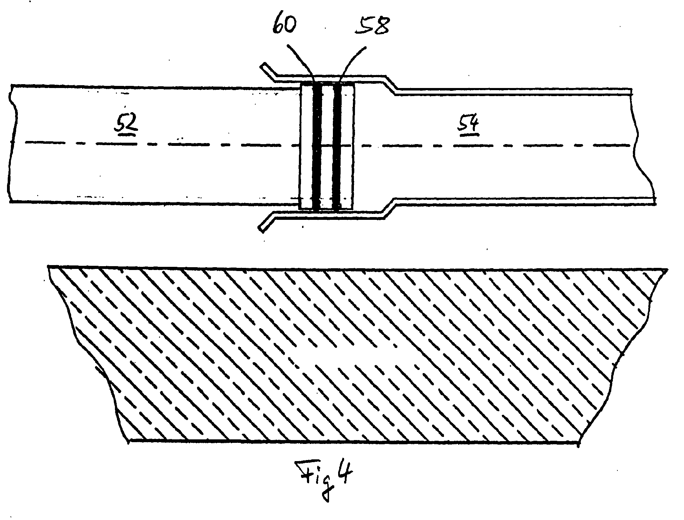

Die Versorgungsleitungsabschnitte 48, die sämtlich als druckfeste Rohre ausgebildet sind, weisen, sofern sie für den Transport von mit Abraum belasteter Spülflüssigkeit vorgesehen sind, einen dreiteiligen Aufbau auf, wobei ein Rohrmittelstück 50 mit zwei lösbaren Endstücken versehen ist. Die beiden lösbaren Endstücke 52, 54 bilden ein kuppelbares Endstückpaar 56, welches in Fig. 5 im Detail gezeigt ist.

Das erste Endstück 52 ist als Dichtungsträger ausgebildet, wobei eine erste und eine zweite Dichtung 58, 60 zwischen mit einem Rohrmantel 62 verschweißten Manschetten 64 gehalten werden. Nach Art der ersten Endstücke 52 sind auch die Enden der starren Rohrstücke 33 an dem Druckringadapter 28 gestaltet.

Das zweite lösbare Endstück 54 weist einen gegenüber dem zugehörigen Rohrmantel 66 erweiterten Dichtabschnitt 68 auf, an dessen Innenfläche im gekuppelten Zustand mindestens die erste Dichtung 58 abdichtend anliegt. Durch diese Gestaltung ist eine dichte Verbindung über einem Bereich von 50 mm sichergestellt. Der Dichtabschnitt 68 seinerseits ist konusartig erweitert, wodurch ein Einführtrichter 70 als Einfädelvorrichtung gebildet ist. Der Innenrand 72 des Einführtrichters 70 weist einen Durchmesser auf, welcher 40 mm größer ist, als der Durchmesser des Außenrandes 74 des lösbaren Endstückes 52. Die Gestaltung der Endstücke 52, 54 ermöglicht es, mit dem Ansetzen eines Rohrelementes gleichzeitig die Versorgungsleitungen durch Stecken zu verlängern, ohne zusätzliche Manipulationen vornehmen zu müssen.

Die Endstücke 52, 54 sind - wie in Fig. 6 gezeigt - schon vor oder bei einem Vorkonfektionieren stumpf oder mit Flanschen an ein Rohrmittelstück 50 angesetzt, wobei zur Verbindung und Abdichtung Dichtmanschetten 76 Verwendung finden. Vorteilhaft ist auch die Verwendung marktüblicher Kupplungen, insbesondere marktüblicher Schnellkupplungen.

Die Ausgestaltung der Enden der Versorgungsleitungen 30 im Bereich des Druckringes 22 entspricht der Ausgestaltung der Endstücke 52 der Versorgungsleitungsabschnitte 48, so daß nach einem Heranfahren des Druckringes an ein neu eingesetztes Rohrelement 24 die Versorgung des Tunnelvortriebssystems unmittelbar gewährleistet ist. Als einzige Maßnahme sind lediglich noch die Absperrelemente 32 sowie Absperrelemente 78 zu öffnen, wobei es ausreichend ist, tunnelseitig in etwa bei jedem dritten bis fünften, vorzugsweise bei jedem vierten Rohrelement Absperrelemente 78 in den Versorgungsleitungsabschnitten 48 vorzusehen.

Bei dem erfindungsgemäßen Verfahren werden oberirdisch vorkonfektionierte Rohrelemente aus einem Rohrelementring 34 mit Ringelementen 36 mit Aufnahmen 40 (Leitungsträger) sowie Versorgungsleitungsabschnitten 48 verbaut. Dazu wird ein Rohrelement 24 mittels eines Kranes in einen Bereich vor eine Presse 14 gesetzt. Während dieses Vorganges sind die Absperrelemente 78, 32 geschlossen. Wird nun der Druckring 22 der Presse herangefahren, fädeln die starren Rohrstücke 33 der Versorgungsleitungen 30 selbsttätig in die Enden der Versorgungsleitungsabschnitte 48 ein. Werden die Pressenzylinder 16, 18 weiter ausgefahren, fädeln automatisch auch die Enden der Versorgungsleitungsabschnitte 48 in die gegenüberliegenden Enden des vorhergehenden Rohrelementes ein, ohne daß es dazu des unterstützenden Eingriffs eines Bauhandwerkers bedarf, bis schließlich der Rohrelementring 34 mit seiner vorderen Stirnseite im wesentlichen vollflächig an der rückwärtigen Stirnfläche des vorhergehenden Rohrelementes 26 anliegt. Die an der Baustelle vor Ort im Schacht arbeitenden Bauhandwerker können sich dadurch voll auf die Maschinenführung konzentrieren.

Da das Ansetzen von Rohrelementen wie beschrieben sehr bedienerfreundlich von Statten geht, kann es in kurzer Zeit sehr häufig wiederholt werden, ohne daß lange Stillstandszeiten des Tunnelvortriebssystems entstehen. Es wird dadurch wieder wirtschaftlich, mit einem kleinen Arbeitsschacht zu arbeiten, was bei einem manuellen Verlängern der Versorgungsleitungen zu Gunsten längerer Rohrelemente aufgegeben worden ist.

Fig. 10 unterscheidet sich von Fig. 2 lediglich dadurch, daß anstelle von Ringelementen 36 Teleskopstangen 80 vorgesehen sind, die sich mit einem auf den Innendurchmesser abgestimmten, rutschfesten Fuß 82 am Rohrelement abstützen und die Aufnahmen 40 gegen die gegenüberliegenden Wandabschnitte pressen.

## Patentansprüche

1. Rohrelement zur Verwendung in einem unterirdischen Vortrieb, bei dem mindestens ein oberirdisch eingebauter Leitungsträger und von dem Leitungsträger gehaltene Versorgungsleitungsabschnitte (48) für den unterirdischen Vortrieb vorgesehen sind,
**dadurch gekennzeichnet,**
**daß** der Leitungsträger (36, 40) mindestens eine Fixierungsvorrichtung aufweist, mit welcher eine lagegenaue Fixierung der Versorgungsleitungsabschnitte (48) gegenüber dem Rohrelement (24) erfolgt.

2. Rohrelement nach Anspruch 1, **dadurch gekennzeichnet, daß** die Fixierungsvorrichtung ein an den Innenquerschnitt des Rohrelementes (24) angepaßtes Ringelement (36) aufweist.

3. Rohrelement nach Anspruch 1 oder 2, **dadurch gekennzeichnet, daß** an dem Ringelement (36) mindestens zwei, vorzugsweise sechs Aufnahmen (40) zur Halterung der Versorgungsleitungsabschnitte (48) vorgesehen sind, wobei die Aufnahmen (40) derart ausgebildet sind, daß die Versorgungsleitungsabschnitte (48) quer zu ihrer Erstreckung in jeder Richtung mindestens 20 mm, vorzugsweise 40 mm gegenüber den Aufnahmen (40) verlagerbar sind.

4. Rohrelement nach Anspruch 3, **dadurch gekennzeichnet, daß** die Aufnahmen (40) jeweils mindestens zwei aus einem elastischen Material, insbesondere Gummi gefertigte Halteelemente (46) aufweisen, die insbesondere ringförmig ausgebildet sind.

5. Rohrelement nach einem der Ansprüche 1 bis 4, **dadurch gekennzeichnet, daß** mindestens zwei Versorgungsleitungsabschnitte (48) rohrartig ausgebildet sind, wobei die Versorgungsleitungsabschnitte (48) kuppelbare Enden (52, 54) aufweisen, die in einem Bereich von mindestens 20 mm, vorzugsweise mindestens 50 mm in Richtung der Längserstreckung der Versorgungsleitungsabschnitte (48) einen flüssigkeitsdichten Übergang zwischen zwei benachbarten Rohrelementen (24, 26) gewährleisten.

6. Rohrelement nach Anspruch 5, **dadurch gekennzeichnet, daß** die Versorgungsleitungsabschnitte (48) mindestens ein Ende (54) aufweisen, welches eine Einfädelvorrichtung, insbesondere einen Einführtrichter (70) aufweist.

7. Rohrelement nach Anspruch 6, **dadurch gekennzeichnet, daß** an einem Ende (54) eines Versorgungsleitungsabschnitts (48) ein Dichtabschnitt (68) ausgebildet ist, dessen Innenquerschnitt vorzugsweise größer ist als der Außenquerschnitt eines gegenüberliegenden Endes (52) des Versorgungsleitungsabschnitts (48).

8. Rohrelement nach einem der Ansprüche 1 bis 7, **dadurch gekennzeichnet, daß** die Versorgungsleitungsabschnitte (48) mindestens ein Ende (52) aufweisen, das als Dichtungsträger ausgebildet ist.

9. Rohrelement nach einem der Ansprüche 1 bis 8, **dadurch gekennzeichnet, daß** die Enden der Versorgungsleitungsabschnitte (48) derart ausgebildet sind, daß die Versorgungsleitungsabschnitte (48) durch Stecken abdichtend kuppelbar sind.

10. Rohrelement nach einem der Ansprüche 1 bis 9, **dadurch gekennzeichnet, daß** die Versorgungsleitungsabschnitte (48) vorzugsweise an einem ihrer Enden Absperrelemente (78) aufweisen.

11. Presse zur Verwendung bei einem unterirdischen Rohrvortrieb mit mindestens einem Druckring (22) oder Druckstücken zum Angriff an einem Rohrelement (24), **gekennzeichnet durch** einen Druckringadapter (28), welcher Versorgungsleitungen (30) für den unterirdischen Vortrieb trägt.

12. Presse nach Anspruch 11, **dadurch gekennzeichnet, daß** die Versorgungsleitungen (30) an ihrem druckringadapterseitigen Ende Absperrelemente (32) aufweisen.

13. Fixierungsvorrichtung zum Einbau in ein bei einem unterirdischen Vortrieb zu verwendendes Rohrelement (24), mit welcher eine lagegenaue Fixierung der Versorgungsleitungsabschnitte (48) gegenüber dem Rohrelement (24) erfolgt.

14. Fixierungsvorrichtung nach Anspruch 13, **gekennzeichnet durch** eine Ausgestaltung als Ringelement, Teleskopstange oder Spindel.

15. Fixierungsvorrichtung nach Anspruch 13 oder 14, **gekennzeichnet durch** mindestens eine Aufnahme (40), welche Versorgungsleitungsabschnitte (48) mit Spiel hält.

16. Druckringadapter zum Anbau an eine Presse (14) für einen unterirdischen Rohrvortrieb.

17. Verfahren zum unterirdischen Rohrvortrieb, bei dem Rohrelemente mittels einer Presse einem Tunnelvortriebsystem folgend in einen Tunnel gepresst werden, **dadurch gekennzeichnet, daß** bei zurückgefahrener Presse mit dem Ansetzen eines neuen Rohrelementes an ein vorhergehendes Rohrelement gleichzeitig ohne zusätzliche Manipulation Versorgungsleitungen des Tunnelvortriebssystems durch Stecken abdichtend verlängert werden.
